# NEUE EUROPÄISCHE PATENTSCHRIFT

(11) **EP 1 980 080 B2**
(45) Veröffentlichungstag und Bekanntmachung des Hinweises auf die Entscheidung über den Einspruch: **08.02.2012**
(45) Hinweis auf die Patenterteilung: 22.07.2009
(21) Anmeldenummer: 07704152.3
(22) Anmeldetag: 26.01.2007
(51) Int. Cl.: H04L 29/06, H04L 9/30, H04L 9/32

(54) **VERFAHREN UND VORRICHTUNG ZUR VEREINBARUNG EINES GEMEINSAMEN SCHLÜSSELS ZWISCHEN EINEM ERSTEN KOMMUNIKATIONSGERÄT UND EINEM ZWEITEN KOMMUNIKATIONSGERÄT**
METHOD AND DEVICE FOR SPECIFYING A COMMON KEY BETWEEN A FIRST COMMUNICATION DEVICE AND A SECOND COMMUNICATION DEVICE
PROCÉDÉ ET DISPOSITIF POUR CONVENIR D'UNE CLÉ COMMUNE ENTRE UN PREMIER ET UN SECOND APPAREIL DE COMMUNICATION

(30) Priorität: 30.01.2006 DE 102006004237
(43) Veröffentlichungstag der Anmeldung: 15.10.2008
(73) Patentinhaber: SIEMENS AKTIENGESELLSCHAFT, 80333 München (DE)
(72) Erfinder: ABENDROTH, Jörg, 81737 München (DE); CUELLAR, Jorge, 82065 Baierbrunn (DE); RAJASEKARAN, Hariharan, 53227 Bonn (DE)
(86) Internationale Anmeldenummer: PCT/EP2007/050759
(87) Internationale Veröffentlichungsnummer: WO 2007/085642

(56) Entgegenhaltungen:
- EP-A1- 1 513 040
- DE-A1- 10 212 620
- US-A1- 2004 019 786
- US-A1- 2005 010 769
- US-A1- 2005 278 787

## Beschreibung

Verfahren und Vorrichtung zur Vereinbarung eines gemeinsamen Schlüssels zwischen einem ersten Kommunikationsgerät und einem zweiten Kommunikationsgerät

Die vorliegende Erfindung betrifft ein Verfahren und eine Vorrichtung zur Vereinbarung eines gemeinsamen Schlüssels zwischen einem ersten Kommunikationsgerät und einem zweiten Kommunikationsgerät.

Derartige Verfahren sind z.B. aus der US-Patentanmeldung US 2005/0 010 769 bekannt.

Für Speichermedien mit geringen integrierten Rechenkapazitäten, wie beispielsweise USB-Sticks mit eingebauten Prozessoren, RFID-Chips, Smart Chip Cards, etc. existieren eine Vielzahl von Anwendungsmöglichkeiten. Sie können beispielsweise zur Zugangskontrolle oder in logistischen Prozessen eingesetzt werden. Ein weiteres Anwendungsgebiet sind Digital Rights Management Systeme, die bei dem Vertrieb von DVDs und lizenzierter Software verwendet werden.

Voraussetzung für den Einsatz dieser Kommunikationsgeräte in solchen sicherheitskritischen Anwendungen ist, dass eine sichere Handhabung der sensiblen Daten insbesondere bei der Übertragung auf ein anderes Kommunikationsgerät gewährleistet wird.

Dies sei an einem Beispiel näher erläutert. Der Zugriff auf kopiergeschützte elektronische Dätenobjekte, wie beispielsweise Audiodateien, Videodateien oder Software, wird üblicherweise durch elektronische Schutzmechanismen namens Digital Rights Management (DRM) Systeme geregelt. Sie schränken den Zugang zu digitalen Angeboten meist auf registrierte, d.h. bezahlende, Benutzer ein, oder ermöglichen sogar die individuelle Abrechnung einzelner Zugriffe auf ein Angebot. In der Praxis funktioniert dies über speziell entwickelte Dateiformate, die einen Kopierschutz bzw. eine Verschlüsselung enthalten. Diese Dateien können folglich nur mit speziellen Programmen und einem dazugehörigen Schlüssel namens Content Encrytion Key (CEK) benutzt werden. Somit ist es ohne den entsprechenden Schlüssel CEK nicht möglich, auf den Inhalt des geschützten Datenobjekts zuzugreifen.

Üblicherweise wird der verschlüsselte Inhalt des zu schützenden Datenobjekts auf einem Speichermedium, wie CDs, DVDs, USB-Sticks oder SD Memory Cards ("Secure Digital Memory Card") gespeichert und der entsprechende Schlüssel CEK zur Entschlüsselung des digitalen Inhalts separat verteilt. Besonders vorteilhaft ist es, den Schlüssel CEK auf einem Kommunikationsgerät mit geringem Speicherplatz und geringer verfügbarer Rechenkapazität auszuliefern.

Ein Beispiel für ein solches Kommunikationsgerät ist ein RFID-Chip ("Radio Frequency Identification"), welcher typischerweise einen Siliziumchip mit einem integrierten Prozessor mit begrenzten Rechenkapazitäten, eine Antenne zur Kommunikation mit einem Lesegerät und einen kleinen Speicherplatz mit rund zwei Kilo Bytes umfasst. Diese Eigenschaften machen RFID-Chips zu einem attraktiven Medium, um Schlüssel CEK zu verteilen, mit denen Zugriff auf verschlüsselte Inhalte auf einem Speichermedium gewährt wird.

Problematisch hierbei ist die Übermittlung des Schlüssels CEK oder der Daten zur Ermittlung des Schlüssels CEK zu dem Kommunikationsgerät, welches den geschützten Inhalt entschlüsseln soll. In diesem Fall muss gewährleistet sein, dass der Schlüssel CEK nur an hierzu autorisierte Kommunikationsgeräte übermittelt wird und diese Kommunikationsgeräte wiederum die Schlüssel CEK nur von hierzu autorisierten Kommunikationsgeräten akzeptieren. Dies wird durch ein gegenseitiges Authentifikationsprotokoll zwischen dem empfangenden Kommunikationsgerät und dem übermittelnden Kommunikationsgerät sichergestellt. Bekannte Authentifikationsprotokolle benötigen hierzu allerdings umfangreiche Rechenkapazitäten und einen hohen verfügbaren Speicherplatz.

Somit liegt der Erfindung die Aufgabe zugrunde, ein Verfahren und eine Vorrichtung zur gegenseitigen Authentifikation eines ersten Kommunikationsgerätes und eines zweiten Kommunikationsgerätes sowie zur Vereinbarung eines gemeinsamen Schlüssels zwischen dem ersten Kommunikationsgerät und dem zweiten Kommunikationsgerät anzubieten, bei dem gegenüber den bisher gekannten Lösungen eine weitere Reduktion der erforderlichen Rechenkapazität sowie eine Reduktion an benötigtem Speicherplatz erreicht wird.

Erfindungsgemäß wird diese Aufgabe durch ein Verfahren und eine Vorrichtung mit den Merkmalen der Ansprüche 1 und 7 gelöst. Vorteilhafte Weiterbildungen der Erfindung sind in den abhängigen Ansprüchen angegeben.

Erfindungsgemäß werden in einem Verfahren zur Vereinbarung eines gemeinsamen Schlüssels zwischen einem ersten Kommunikationsgerät und einem zweiten Kommunikationsgerät Sicherheitsparameter zwischen den beiden Kommunikationsgeräten vereinbart. Anhand der vereinbarten Sicherheitsparameter wird vom zweiten Kommunikationsgerät ein erster Sicherheitswert ermittelt und an das erste Kommunikationsgerät übermittelt. Vom ersten Kommunikationsgerät anhand des übermittelten ersten Sicherheitswertes ein zweiter Sicherheitswert sowie. Anhand der vereinbarten Sicherheitsparameter und des übermittelten ersten Sicherheitswertes ein dritter Sicherheitswert ermittelt und an das zweite Kommunikationsgerät übermittelt werden. Das zweite Kommunikationsgerät authentifiziert das erste Kommunikationsgerät, wenn der übermittelte zweite Sicherheitswert und ein vom zweiten Kommunikationsgerät anhand der vereinbarten Sicherheitsparameter ermittelter vierter Sicherheitswert übereinstimmen. Bei einer erfolgreichen Authentifizierung ermitteln das erste Kommunikationsgerät und das zweite Kommunikationsgerät jeweils anhand der vereinbarten Sicherheitsparameter und des dritten Sicherheitswertes einen gemeinsamen Schlüssel. Besonders vorteilhaft hierbei ist, dass das Authentifikationsprotokoll so ausgelegt ist, dass das Kommunikationsgerät mit geringen integrierten Rechenkapazitäten weder Signaturen noch Zertifikate prüfen oder verifizieren muss, und somit eine erhebliche Reduktion des erforderlichen Rechenaufwandes erzielt wird. Des Weiteren wird kein zentraler Server zur Authentifikation benötigt, da alle für den Authentifikationsprozess erforderlichen Werte bereits jeweils auf einem für das jeweilige Kommunikationsgerät zugänglichen Speichermedium abrufbar sind.

Nach einer weiteren Ausgestaltung der vorliegenden Erfindung werden die vereinbarten Sicherheitsparameter und die Sicherheitswerte drahtlos zwischen dem ersten und dem zweiten Kommunikationsgerät übermittelt, insbesondere über hochfrequente elektromagnetische Signale nach dem RFID-Standard.

Nach einer weiteren vorteilhaften Ausgestaltung der vorliegenden Erfindung wird ein Zählerwert in dem ersten Kommunikationsgerät nach jeder Vereinbarung eines gemeinsamen Schlüssels erhöht und zur Ermittlung des dritten Sicherheitswertes benutzt. Somit wird in vorteilhafter Weise ein gemeinsamer Schlüssel zwischen den beiden Kommunikationsgeräten mit möglichst geringem Rechenaufwand vereinbart.

Gemäß einer vorteilhaften Weiterbildung der vorliegenden Erfindung wird anhand der vereinbarten Sicherheitsparameter und des übermittelten zweiten und/oder dritten Sicherheitswertes vom zweiten Kommunikationsgerät ein fünfter Sicherheitswert ermittelt und an das erste Kommunikationsgerät übermittelt. Das erste Kommunikationsgerät authentifiziert das zweite Kommunikationsgerät, wenn der übermittelte fünfte Sicherheitswert und ein vom ersten Kommunikationsgerät anhand der vereinbarten Sicherheitsparameter ermittelter sechster Sicherheitswert übereinstimmen. Dies hat die vorteilhafte Wirkung, dass auch das zweite Kommunikationsgerät vom ersten Kommunikationsgerät direkt authentifiziert wird. Dies kann in besonders sicherheitskritischen Anwendungen erforderlich sein.

Gemäß der erfindungsgemäßen Vorrichtung zur Vereinbarung eines gemeinsamen Schlüssels zwischen einem ersten Kommunikätionsgerät und einem zweiten Kommunikationsgerät weist die Vorrichtung Mittel auf, die derart eingerichtet sind, dass folgende Verfahrensschritte durchführbar sind:
Zwischen dem ersten und dem zweiten Kommunikationsgerät werden Sicherheitsparameter vereinbart. Anhand der vereinbarten Sicherheitsparameter wird vom zweiten Kommunikationsgerät ein erster Sicherheitswert ermittelt und an das erste Kommunikationsgerät übermittelt. Vom ersten Kommunikationsgerät werden anhand des übermittelten ersten Sicherheitswertes ein zweiter Sicherheitswert sowie anhand der vereinbarten Sicherheitsparameter und des übermittelten ersten Sicherheitswertes ein dritter Sicherheitswert ermittelt und an das zweite Kommunikationsgerät übermittelt. Das zweite Kommunikationsgerät authentifiziert das erste Kommunikationsgerät, wenn der übermittelte zweite Sicherheitswert und ein vom zweiten Kommunikationsgerät anhand der vereinbarten Sicherheitsparameter ermittelter vierter Sicherheitswert übereinstimmen. Bei einer erfolgreichen Authentifizierung ermitteln das erste Kommunikationsgerät und das zweite Kommunikationsgerät jeweils anhand der vereinbarten Sicherheitsparameter und des dritten Sicherheitswertes einen gemeinsamen Schlüssel.

Die vorliegende Erfindung wird nachfolgend an Ausführungsbeispielen anhand der Zeichnungen näher erläutert. Es zeigen
- Figur 1: eine schematische Darstellung eines Verfahrens zur Authentifizierung und Vereinbarung eines gemeinsa- men Schlüssels zweier Kommunikationsgeräte,
- Figur 2: eine schematische Darstellung eines Datenbitvektors mit einer Belegung des Datenbitvektors mit Informa- tionen zu Rechten zu einem Datenobjekt,
- Figur 3: eine schematische Darstellung eines Verfahrens zur Vereinbarung eines gemeinsamen Schlüssels zwischen zwei Kommunikationsgeräten,
- Figur 4: eine schematische Darstellung eines Verfahrens zur gegenseitigen Authentifikation zwischen zwei Kommu- nikationsgeräten.

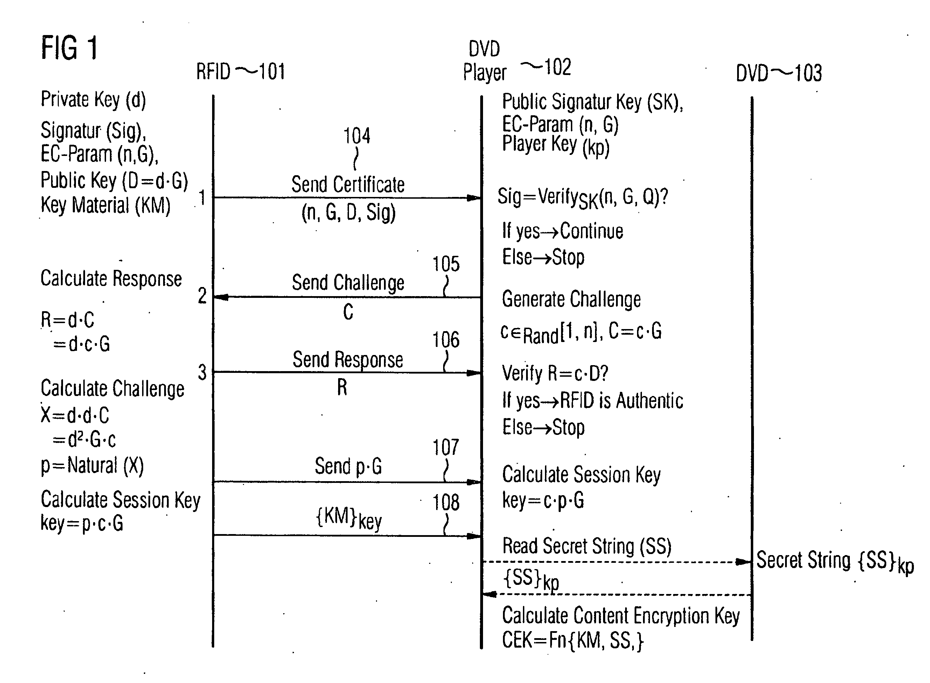

Die Figur 1 zeigt schematisch ein Verfahren zur Authentifizierung eines ersten Kommunikationsgerätes gegenüber einem zweiten Kommunikationsgerät und zur Vereinbarung eines gemeinsamen Schlüssels zwischen einem ersten Kommunikationsgerät und einem zweiten Kommunikationsgerät. Das erste Kommunikationsgerät ist in diesem Ausführungsbeispiel ein RFID-Chip 101 und das zweite Kommunikationsgerät ein DVD-Player 102, welcher Zugriff auf den auf einer DVD 103 gespeicherten digitalen Inhalt erhalten möchte. Hierzu benötigt der DVD-Player 102 vom RFID-Chip 101 Schlüsselmaterial KM, um als Funktion von Secret String SS und Schlüsselmaterial KM den Content Encrytion Key CEK zur Entschlüsselung des digitalen Inhalts auf der DVD 103 zu generieren. Zu Beginn des Verfahrens vereinbaren die beiden Kommunikationsgeräte 101 und 102 Sicherheitsparameter. Dem RFID-Chip 101 ist ein Privat Key d, eine Signatur Sig, Parameter auf der elliptischen Kurve n,G und ein Public Key D=d*G bekannt und dem DVD-Player 102 ist ein Public Signature Key SK, Parameter auf der elliptischen Kurve n,G und ein Player Key kp bekannt.

In einem ersten Schritt 104 übermittelt der RFID-Chip 101 die Parameter auf der elliptischen Kurve n,G zusammen mit dem Public Key D und der Signatur Sig an den DVD-Player 102. Sofern der DVD-Player 102 die Signatur des RFID-Chips 101 anhand der Parameter auf der elliptischen Kurve n,G und des Public Signature Key SK verifiziert hat, berechnet der DVD-Player 102 einen ersten Sicherheitswert C=c*G mit c ∈ _{RAND} [1,n] und überträgt diesen ersten Sicherheitswert in einem zweiten Schritt 105 an den RFID-Chip 101. Dieser berechnet anhand des empfangenen ersten Sicherheitswertes C und seines Private Keys d einen zweiten Sicherheitswert R=d*C. Zur Ermittlung eines dritten Sicherheitswertes p*G berechnet der RFID-Chip 101 zunächst einen X=d*R und wandelt den ermittelten Wert X anschließend in eine natürliche Zahl p um. Zuletzt wird der dritte Sicherheitswert p*G von dem RFID-Chip 101 ermittelt. Der zweite und der dritte Sicherheitswert werden schließlich in den Schritten 106 und 107 an den DVD-Player 102 übermittelt. Wenn ein vom DVD-Player 102 ermittelter vierter Sicherheitswert c*D = c*d*G gleich dem empfangenen zweiten Sicherheitswert R ist, authentifiziert der DVD-Player 102 den RFID-Chip 101. Beide Kommunikationsgeräte 101 und 102 berechnen anschließend den gemeinsamen Sitzungsschlüssel Key = p*c*G. Anhand des gemeinsamen Schlüssels Key verschlüsselt der RFID-Chip 101 das Schlüsselmaterial KM und übermittelt das verschlüsselte Schlüsselmaterial in Schritt 108 an den DVD-Player 102. Der DVD-Player 102 ermittelt auf der DVD 103 den entsprechenden Secret String SS und berechnet auf Grundlage des entschlüsselten Schlüsselmaterials KM und des Secret String SS den Content Encryption Key CEK. Mit Hilfe des CEK ist der DVD-Player 102 nun in der Lage, den auf der DVD 103 befindlichen, verschlüsselten digitalen Inhalt zu entschlüsseln.

Da der DVD-Player 102 den Content Encryption Key CEK nur ermitteln kann, wenn er den Secret String SS unter Benutzung eines identischen Device Keys kp erhalten hat, wird der DVD-Player 102 in diesem Ausführungsbeispiel implizit gegenüber dem RFID-Chip 101 authentifiziert.

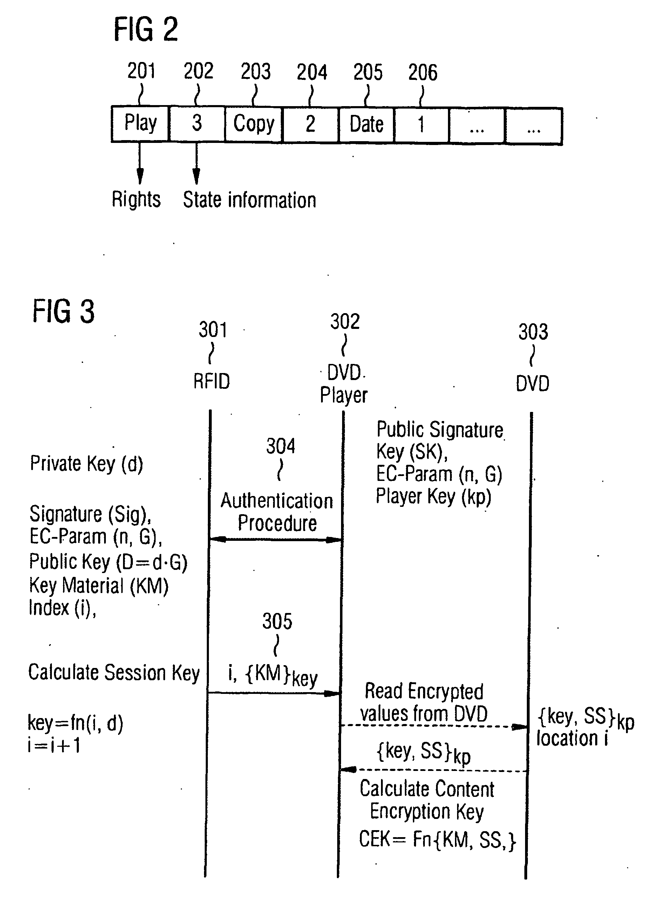

Figur 2 zeigt exemplarisch einen Datenbitvektor, welcher auf einem Kommunikationsgerät mit geringer Rechenkapazität und geringem verfügbaren Speicherplatz abgespeichert ist. Dieser zeigt an, welche Rechte ein bestimmter Benutzer an einem bestimmten Datenobjekt besitzt. Der Datenvektor kann beispielsweise ein bestehendes Recht an einer vordefinierten Stelle 201 im Datenbitvektor durch eine 1 anzeigen und ein nicht bestehendes Recht durch eine 0. Eine korrespondierende Statusfunktion über das jeweilige Recht ist in diesem Beispiel in einer vorgebbaren benachbarten Datenbitvektor- Zelle 202 vorgesehen. In dem Beispiel in Figur 2 kann der Datenbitvektor dahingehend interpretiert werden, dass das Datenobjekt dreimal 202 abgespielt 201 werden kann , zweimal 203 kopiert 204 werden kann und ab einem gewissen Datum 205 nur noch einmal kopiert 206 werden kann.

Die Figur 3 zeigt schematisch ein Verfahren zur Vereinbarung eines gemeinsamen Schlüssels zwischen einem ersten Kommunikationsgerät und einem zweiten Kommunikationsgerät. Die Authentifizierungsprozedur zwischen dem RFID-Chip 301 und dem DVD-Player 302 erfolgt in diesem Ausführungsbeispiel wie in dem weiter oben beschriebenen Ausführungsbeispiel zu Figur 1. In diesem Ausführungsbeispiel ist weiterhin ein Zählerwert i vorgesehen, welcher im RFID-Chip 301 abgespeichert ist und nach jeder abgeschlossenen Vereinbarung eines gemeinsamen Schlüssels um den Wert 1 erhöht wird. Der gemeinsame Schlüssel Key wird nach erfolgter Authentifizierung des RFID-Chips 301 gegenüber dem DVD-Player 302 in Schritt 304 als eine Funktion des Zählerwertes i und des Private Key d durch den RFID-Chip 301 ermittelt. Anschließend wird der Zählerwert i und das mit dem Schlüssel Key verschlüsselte Schlüsselmaterial KM von dem RFID-Chip 301 an den DVD-Player 302 im Schritt 305 übermittelt. Hiernach wird der Zählerwert i vom RFID-Chip 301 um den Wert 1 erhöht. Mit Hilfe des empfangenen Zählerwertes i rekonstruiert der DVD-Player 302 den Schlüssel Key und entschlüsselt anschließend das verschlüsselte Schlüsselmaterial KM. Wie weiter oben schon erläutert, ist der DVD-Player 302 anschließend in der Lage, auf Grundlage des entschlüsselten Schlüsselmaterials KM und des Secret String SS den Content Encryption Key CEK zur Entschlüsselung des digitalen Inhalts auf der DVD 303 zu ermitteln.

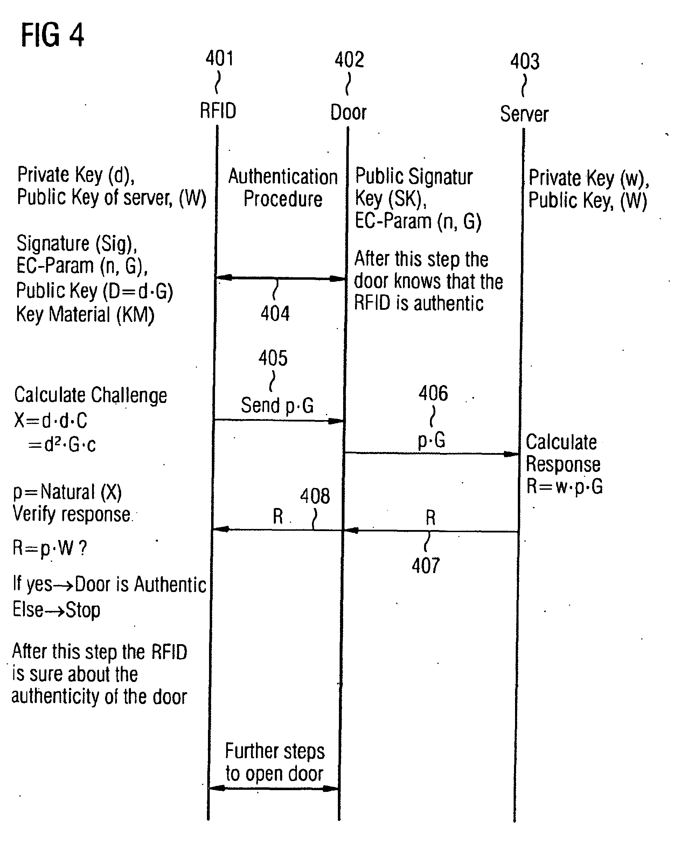

Die Figur 4 zeigt ein Verfahren zur Authentifizierung eines zweiten Kommunikationsgerätes gegenüber einem ersten Kommunikationsgerät. In diesem Ausführungsbeispiel wird anstelle einer DVD ein Server 403 verwendet, zu dem ein Nutzer mit Hilfe eines RFID-Chips 401 über eine Serverdoor 402 Zugang erhalten möchte. Die Authentifizierung des RFID-Chips 401 gegenüber der Serverdoor 402 erfolgt wie in dem in Figur 2 beschriebenen Verfahren. Nach erfolgter Authentifizierung in Schritt 404 ermittelt der RFID-Chip 401 den dritten Sicherheitswert p*G und übermittelt diesen in Schritt 405 an die Serverdoor 402, welche den dritten Sicherheitswert wiederum in Schritt 406 an den Server 403 übermittelt. Der Server 403 übermittelt nun einen fünften Sicherheitswert R=w*p*G und übermittelt den fünften Sicherheitswert in den Schritten 407 und 408 über die Severdoor 402 an den RFID-Chip 401. Stimmt der übermittelte fünfte Sicherheitswert mit einem vom RFID-Chip 401 ermittelten sechsten Sicherheitswert p*W=p*w*G überein, authentifiziert der RFID-Chip 401 die Serverdoor 402. Nach abgeschlossener gegenseitiger Authentifizierung kann der RFID-Chip 401 Informationen übermitteln, die benötigt werden, um über die Serverdoor 402 Zugang zum Server 403 zu erhalten.

Die vorliegende Erfindung ist nicht auf die hier beschriebenen Ausführungsbeispiele beschränkt.

## Patentansprüche

1. Verfahren zur Vereinbarung eines gemeinsamen Schlüssels zwischen einem ersten Kommunikationsgerät und einem zweiten Kommunikationsgerät, wobei
- zwischen dem ersten und dem zweiten Kommunikationsgerät Sicherheitsparameter vereinbart werden (104),
- anhand der vereinbarten Sicherheitsparameter vom zweiten Kommunikationsgerät ein erster Sicherheitswert ermittelt wird und an das erste Kommunikationsgerät übermittelt wird (105),
- vom ersten Kommunikationsgerät anhand des übermittelten ersten Sicherheitswertes ein zweiter Sicherheitswert sowie anhand der vereinbarten Sicherheitsparameter und des übermittelten ersten Sicherheitswertes ein dritter Sicherheitswert ermittelt werden und an das zweite Kommunikationsgerät übermittelt werden (106, 107),
- das zweite Kommunikationsgerät das erste Kommunikationsgerät authentifiziert, wenn der übermittelte zweite Sicherheitswert und ein vom zweiten Kommunikationsgerät anhand der vereinbarten Sicherheitsparameter ermittelter vierter Sicherheitswert übereinstimmen,
- bei einer erfolgreichen Authentifizierung das erste Kommunikationsgerät und das zweite Kommunikationsgerät jeweils anhand der vereinbarten Sicherheitsparameter und des dritten Sicherheitswertes einen gemeinsamen Schlüssel ermitteln.

2. Verfahren nach Anspruch 1, wobei
die vereinbarten Sicherheitsparameter Parameter einer elliptischen Kurve und Parameter für ein asymmetrisches kryptographisches Verfahren umfassen.

3. Verfahren nach Anspruch 1, wobei
die vereinbarten Sicherheitsparameter und die Sicherheitswerte drahtlos zwischen dem ersten und dem zweiten Kommunikationsgerät übermittelt werden.

4. Verfahren nach Anspruch 1, wobei
die vereinbarten Sicherheitsparameter und die Sicherheitswerte über hochfrequente elektromagnetische Signale nach dem RFID-Standard zwischen dem ersten und dem zweiten Kommunikationsgerät übermittelt werden.

5. Verfahren nach Anspruch 1, wobei
- ein Zählerwert in dem ersten Kommunikationsgerät nach jeder Vereinbarung eines gemeinsamen Schlüssels erhöht wird,
- der Zählerwert zur Ermittlung des dritten Sicherheitswertes benutzt wird.

6. Verfahren nach Anspruch 1, wobei
- anhand der vereinbarten Sicherheitsparameter und des übermittelten zweiten oder dritten Sicherheitswertes vom zweiten Kommunikationsgerät ein fünfter Sicherheitswert ermittelt wird und an das erste Kommunikationsgerät übermittelt wird,
- das erste Kommunikationsgerät das zweite Kommunikationsgerät authentifiziert, wenn der übermittelte fünfte Sicherheitswert und ein vom ersten Kommunikationsgerät anhand der vereinbarten Sicherheitsparameter ermittelter sechster Sicherheitswert übereinstimmen.

7. Vorrichtung zur Vereinbarung eines gemeinsamen Schlüssels zwischen einem ersten Kommunikationsgerät und einem zweiten Kommunikationsgerät, bei dem die Vorrichtung Mittel aufweist, die derart eingerichtet sind, dass folgende Verfahrensschritte durchführbar sind:
- zwischen dem ersten und dem zweiten Kommunikationsgerät Sicherheitsparameter vereinbart werden (104),
- anhand der vereinbarten Sicherheitsparameter vom zweiten Kommunikationsgerät ein erster Sicherheitswert ermittelt wird und an das erste Kommunikationsgerät übermittelt wird (105),
- vom ersten Kommunikationsgerät anhand des übermittelten ersten Sicherheitswertes ein zweiter Sicherheitswert sowie anhand der vereinbarten Sicherheitsparameter und des übermittelten ersten Sicherheitswertes ein dritter Sicherheitswert ermittelt werden und an das zweite Kommunikationsgerät übermittelt werden (106, 107),
- das zweite Kommunikationsgerät das erste Kommunikationsgerät authentifiziert, wenn der übermittelte zweite Sicherheitswert und ein vom zweiten Kommunikationsgerät anhand der vereinbarten Sicherheitsparameter ermittelter vierter Sicherheitswert übereinstimmen,
- bei einer erfolgreichen Authentifizierung das erste Kommunikationsgerät und das zweite Kommunikationsgerät jeweils anhand der vereinbarten Sicherheitsparameter und des dritten Sicherheitswertes einen gemeinsamen Schlüssel ermitteln.

## Claims

1. Method for agreeing a shared key between a first communication device and a second communication device, wherein
- security parameters are agreed between the first and the second communication device (104),
- a first security value is determined by the second communication device on the basis of the agreed security parameters and transmitted to the first communication device (105),
- a second security value is determined by the first communication device on the basis of the transmitted first security value and a third security value is determined by the first communication device on the basis of the agreed security parameters and the transmitted first security value and both are transmitted to the second communication device (106, 107),
- the second communication device authenticates the first communication device if the transmitted second security value and a fourth security value determined by the second communication device on the basis of the agreed security parameters match,
- in the event of a successful authentication the first communication device and the second communication device each determine a shared key on the basis of the agreed security parameters and the third security value.

2. Method according to claim 1, wherein the agreed security parameters comprise parameters of an elliptic curve and parameters for an asymmetric cryptographic method.

3. Method according to claim 1, wherein
the agreed security parameters and the security values are transmitted wirelessly between the first and the second communication device.

4. Method according to claim 1, wherein
the agreed security parameters and the security values are transmitted between the first and the second communication device via high-frequency electromagnetic signals in accordance with the RFID standard.

5. Method according to claim 1, wherein
- a counter value is incremented in the first communication device after each agreement of a shared key,
- the counter value is used for determining the third security value.

6. Method according to claim 1, wherein
- a fifth security value is determined by the second communication device on the basis of the agreed security parameters and the transmitted second or third security value and transmitted to the first communication device,
- the first communication device authenticates the second communication device if the transmitted fifth security value and a sixth security value determined by the first communication device on the basis of the agreed security parameters match.

7. Device for agreeing a shared key between a first communication device and a second communication device, wherein the device has means which are configured in such a way that the following method steps can be performed:
- security parameters are agreed between the first and the second communication device (104),
- a first security value is determined by the second communication device on the basis of the agreed security parameters and transmitted to the first communication device (105),
- a second security value is determined by the first communication device on the basis of the transmitted first security value and a third security value is determined by the first communication device on the basis of the agreed security parameters and the transmitted first security value and both are transmitted to the second communication device (106, 107),
- the second communication device authenticates the first communication device if the transmitted second security value and a fourth security value determined by the second communication device on the basis of the agreed security parameters match,
- in the event of a successful authentication the first communication device and the second communication device each determine a shared key on the basis of the agreed security parameters and the third security value.

## Revendications

1. Procédé pour convenir d'une clé commune entre un premier appareil de communication et un second appareil de communication,
- des paramètres de sécurité étant convenus entre le premier et le second appareils de communication (104),
- une première valeur de sécurité étant déterminée par le second appareil de communication à l'aide des paramètres de sécurité convenus et étant transmise au premier appareil de communication (105),
- une deuxième valeur de sécurité étant déterminée par le premier appareil de communication à l'aide de la première valeur de sécurité transmise ainsi qu'une troisième valeur de sécurité étant déterminée à l'aide des paramètres de sécurité convenus et de la première valeur de sécurité transmise et étant transmises au second appareil de communication (106, 107),
- le second appareil de communication authentifiant le premier appareil de communication lorsque la deuxième valeur de sécurité transmise et une quatrième valeur de sécurité déterminée par le second appareil de communication à l'aide des paramètres de sécurité convenus correspondent,
- le premier appareil de communication et le second appareil de communication, lors d'une authentification réussie, déterminant une clé commune respectivement à l'aide des paramètres de sécurité convenus et de la troisième valeur de sécurité.

2. Procédé selon la revendication 1,
les paramètres de sécurité convenus comprenant des paramètres d'une courbe elliptique et des paramètres pour un procédé cryptographique asymétrique.

3. Procédé selon la revendication 1,
les paramètres de sécurité convenus et les valeurs de sécurité étant transmis sans fil entre le premier et le second appareils de communication.

4. Procédé selon la revendication 1,
les paramètres de sécurité convenus et les valeurs de sécurité étant transmis entre le premier et le second appareils de communication par l'intermédiaire de signaux électromagnétiques à haute fréquence selon la norme RFID.

5. Procédé selon la revendication 1,
- une valeur de comptage étant augmentée dans le premier appareil de communication après chaque convention d'une clé commune,
- la valeur de comptage étant utilisée pour déterminer la troisième valeur de sécurité.

6. Procédé selon la revendication 1,
- une cinquième valeur de sécurité étant déterminée par le second appareil de communication à l'aide des paramètres de sécurité convenus et de la deuxième ou troisième valeur de sécurité transmise et étant transmise au premier appareil de communication,
- le premier appareil de communication authentifiant le second appareil de communication lorsque la cinquième valeur de sécurité transmise et une sixième valeur de sécurité déterminée par le premier appareil de communication à l'aide des paramètres de sécurité convenus correspondent.

7. Dispositif pour convenir d'une clé commune entre un premier appareil de communication et un second appareil de communication, dans lequel le dispositif présente des moyens qui sont configurés de manière à ce que les étapes de procédé suivantes soient réalisables :
- des paramètres de sécurité sont convenus entre le premier et le second appareils de communication (104),
- une première valeur de sécurité est déterminée par le second appareil de communication à l'aide des paramètres de sécurité convenus et est transmise au premier appareil de communication (105),
- une deuxième valeur de sécurité est déterminée par le premier appareil de communication à l'aide de la première valeur de sécurité transmise ainsi qu'une troisième valeur de sécurité est déterminée à l'aide des paramètres de sécurité convenus et de la première valeur de sécurité transmise et sont transmises au second appareil de communication (106, 107),
- le second appareil de communication authentifie le premier appareil de communication lorsque la deuxième valeur de sécurité transmise et une quatrième valeur de sécurité déterminée par le second appareil de communication à l'aide des paramètres de sécurité convenus correspondent,
- le premier appareil de communication et le second appareil de communication, lors d'une authentification réussie, déterminent respectivement une clé commune à l'aide des paramètres de sécurité convenus et de la troisième valeur de sécurité.
